# EUROPÄISCHE PATENTSCHRIFT

(11) **EP 2 587 875 B1**
(45) Veröffentlichungstag und Bekanntmachung des Hinweises auf die Patenterteilung: **07.02.2018**
(21) Anmeldenummer: 12179814.4
(22) Anmeldetag: 09.08.2012
(51) Int. Cl.: H04W 76/00, H04W 8/18, H04W 8/26

(54) **Kommunikationsberechtigung zum Verteilen von Rufen an eine Gruppe**
Communication authorization for distributing calls to a group
Autorisation de communication pour la distribution d'appels à un groupe

(30) Priorität: 28.10.2011 DE 102011085364; 16.12.2011 DE 102011088796
(43) Veröffentlichungstag der Anmeldung: 01.05.2013
(73) Patentinhaber: Rohde & Schwarz GmbH & Co. KG, 81671 München (DE)
(72) Erfinder: Eberl, Peter, 82054 Arget (DE); Bayer, Stefan, 80687 München (DE); Dinsing, Karl, 81479 München (DE)
(74) Vertreter: Körfer, Thomas

(56) Entgegenhaltungen:
- EP-A2- 2 285 022
- US-A- 5 841 854
- US-A1- 2007 060 182
- KALLGREN D G ET AL: "IP Unicast/Multicast Operation over Stanag 5066", PROCEEDINGS OF THE MILITARY COMMUNICATIONS CONFERENCE (MILCOM), Bd. 1, 28. Oktober 2001 (2001-10-28), Seiten 501-505, XP010579062, DOI: 10.1109/MILCOM.2001.985845 ISBN: 978-0-7803-7225-2
- HUIYAN ZHANG ET AL: "A Third-Generation Multicast Protocol for HF Wireless Networks", MILITARY COMMUNICATIONS CONFERENCE, 2005. MILCOM 2005. IEEE ATLANTIC CITY, NJ, USA 17-20 OCT. 2005, PISCATAWAY, NJ, USA,IEEE, PISCATAWAY, NJ, USA, 17 October 2005 (2005-10-17), pages 1-7, XP010901494, DOI: 10.1109/MILCOM.2005.1605996 ISBN: 978-0-7803-9393-6

## Beschreibung

Die Erfindung betrifft eine Funkkommunikationsvorrichtung, ein Funkkommunikationssystem mit mehreren Funkkommunikationsvorrichtungen und ein Verfahren zur Funkkommunikation, welche eine Kommunikation in Gruppen ermöglichen.

Die deutsche Offenlegungsschrift DE 10 2009 041 203 A1 zeigt ein Kanalauswahlverfahren zur Kommunikation zwischen Funkgeräten. Ein Punkt-zu-Punkt-Kommunikationsverfahren wird von der Druckschrift jedoch nicht gezeigt.

Um eine Punkt-zu-Punkt-Verbindung herzustellen, ist es notwendig, die Adresse des zu rufenden Teilnehmers zu kennen. Dies ist insbesondere problematisch, wenn eine Station, zum Beispiel eine Küstenstation über eine Mehrzahl von Teilnehmern verfügt. Es ergibt sich dann die Problematik, dass ein beliebiger Teilnehmer der Küstenstation gerufen werden soll, jedoch nicht bekannt ist, welche der Teilnehmer der Küstenstation gerade kommunikationsbereit sind.

Aus der Publikation "IP Unicast/Multicast Operation over STANAG 5066", MiLCOM, 28.10.2001, Seiten 501-505, der Autoren D.G. Kallgren et.al. ist ein Hochfrequenzgateway bekannt, welches individuell-adressierte Nachrichten und Gruppen-adressierte Nachrichten empfangen und weiterverarbeiten kann.

Aus der US 2007/0060182 A1 ist ein Verfahren zur Priorisierung eines Teilnehmers in einem Bündelfunksystem bekannt. Dem anfragenden Teilnehmer wird durch das Mobile Switching Center MSC ein Kommunikationskanal zugewiesen, wobei der Teilnehmer dann Sprechender und alle im Bündelfunk anwesenden Teilnehmer Zuhörende sind.

Der Erfindung liegt die Aufgabe zu Grunde, eine Funkkommunikationsvorrichtung, ein Funkkommunikationssystem und ein Verfahren zur Funkkommunikation zu schaffen, welche eine einfache Bedienung bei einer hohen Geschwindigkeit des Verbindungsaufbaus gewährleisten.

Die Aufgabe wird erfindungsgemäß für das Verfahren durch die Merkmale des unabhängigen Anspruchs 1 und für eine Funkkommunikationsvorrichtung durch die Merkmale des unabhängigen Anspruchs 7 gelöst. Vorteilhafte Weiterbildungen sind Gegenstand der hierauf rückbezogenen Unteransprüche.

Eine erfindungsgemäße Funkkommunikationsvorrichtung verfügt über eine Steuereinrichtung, welche ausgebildet ist, um Nachrichten an eine der Funkkommunikationsvorrichtung zugewiesene Adresse zu empfangen und zu verarbeiten. Die Funkkommunikationsvorrichtung ist weiterhin ausgebildet, um mit zumindest einer weiteren Funkkommunikationsvorrichtung zu einer Gruppe mit einer Gruppenadresse zusammengefasst zu werden. Die Steuereinrichtung ist dabei ausgebildet, um Nachrichten an die Gruppenadresse zu empfangen und zu verarbeiten. So muss ein Teilnehmer die individuelle Adresse der individuellen Funkkommunikationsvorrichtung nicht kennen, um mit einer Funkkommunikationsvorrichtung aus der Gruppe in Kontakt treten zu können.

Bevorzugt ist die Steuereinrichtung wie folgt ausgebildet: Nach Empfang einer Nachricht von einem ersten Teilnehmer an die Gruppenadresse wird eine erste Kommunikationsverbindung zu dem ersten Teilnehmer aufgebaut. Zum Verbindungsaufbau wird die Adresse der Funkkommunikationsvorrichtung genutzt. Der Verbindungsaufbau wird nur durchgeführt, wenn gegenwärtig keine Kommunikationsverbindung besteht. So ist die Gruppenadresse weiterhin für Kommunikationsversuche weiterer Teilnehmer frei.

Die Steuereinrichtung ist vorzugsweise ausgebildet, um den Aufbau der ersten Kommunikationsverbindung sämtlichen Funkkommunikationsvorrichtungen der Gruppe mitzuteilen. So ist sichergestellt, dass diese Funkkommunikationsvorrichtung nicht durch weitere Verbindungsversuche unterbrochen wird.

Vorteilhafterweise ist die Steuereinrichtung ausgebildet, um einen für den Aufbau der ersten Kommunikationsverbindung genutzten Kommunikationskanal sämtlichen Funkkommunikationsvorrichtungen der Gruppe mitzuteilen. So ist sichergestellt, dass keine weitere Funkkommunikationsvorrichtung denselben Kommunikationskanal für eigene Verbindungen einsetzt.

Bevorzugt ist die Steuereinrichtung ausgebildet, um von einem Steuerrechner, welcher Teil der Gruppe ist eine innerhalb der Gruppe lediglich einfach vorhandene Kommunikationsberechtigung zu empfangen, und um die erste Kommunikationsverbindung lediglich dann aufzubauen, wenn sie über die Kommunikationsberechtigung verfügt. So ist sichergestellt, dass genau eine Funkkommunikationsvorrichtung jeden eingehenden Ruf beantwortet.

Nachfolgend wird die Erfindung anhand der Zeichnung, in der ein vorteilhaftes Ausführungsbeispiel der Erfindung dargestellt ist, beispielhaft beschrieben. In der Zeichnung zeigen:
- Fig. 1: ein Ausführungsbeispiel der erfindungsgemäßen Funkkommunikationsvorrichtung als Blockschaltbild;
- Fig. 2: ein Ausführungsbeispiel des erfindungsgemäßen Funkkommunikationssystems in einem ersten Status;
- Fig. 3: das Ausführungsbeispiel des erfindungsgemäßen Funkkommunikationssystems in einem zweiten Status, und
- Fig. 4: ein Ausführungsbeispiel des erfindungsgemäßen Verfahrens zur Funkkommunikation als Flussdiagramm.

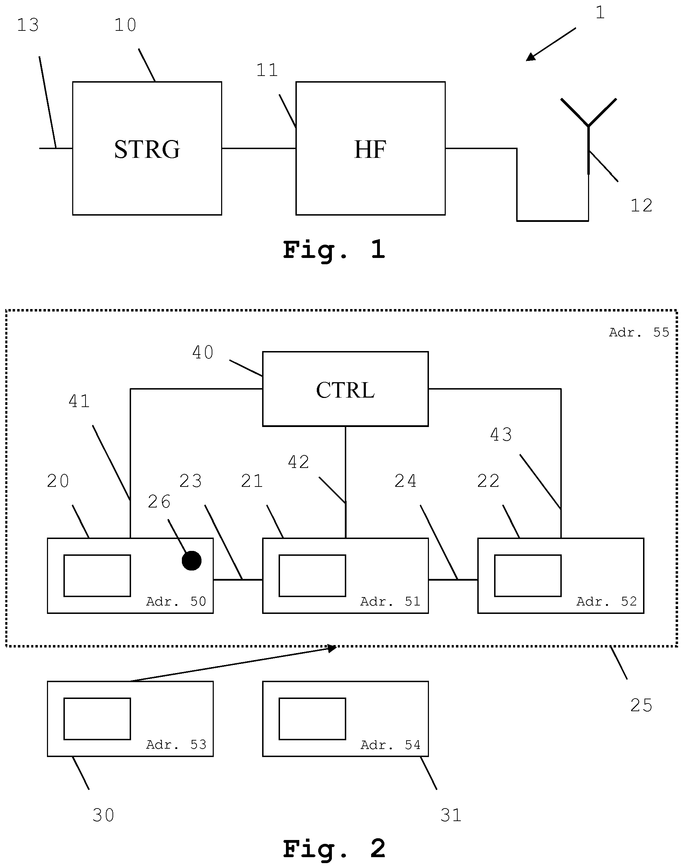

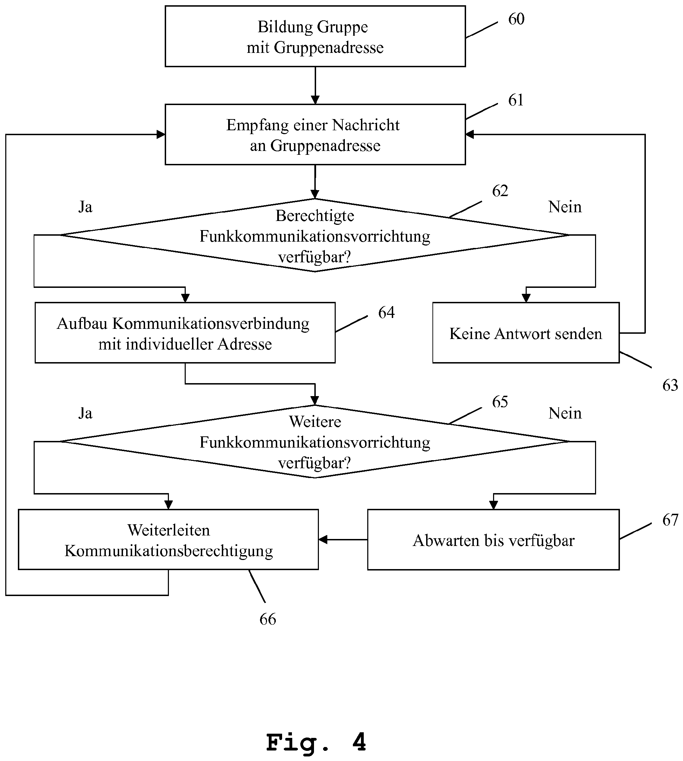

Zunächst wird anhand der Fig. 1 der Aufbau und die generelle Funktionsweise eines Ausführungsbeispiels der erfindungsgemäßen Funkkommunikationsvorrichtung erläutert. Mittels Fig. 2 - 3 werden anschließend der Aufbau und die Funktionsweise eines Ausführungsbeispiels des erfindungsgemäßen Funkkommunikationssystems gezeigt. Abschließend wird anhand von Fig. 4 im Detail auf die Funktionsweise eines Ausführungsbeispiels des erfindungsgemäßen Verfahrens zur Funkkommunikation eingegangen. Identische Elemente wurden in ähnlichen Abbildungen zum Teil nicht wiederholt dargestellt und beschrieben.

Die Erfindung eignet sich insbesondere für Verbindungen nach dem Standard STANAG 4538 mit einem Kommunikationsverfahren, welches eine digitale Kommunikation zwischen Teilnehmern in einem Kommunikationsnetzwerk ermöglicht.

Fig. 1 zeigt ein Ausführungsbeispiel der erfindungsgemäßen Funkkommunikationsvorrichtung 1. Die Funkkommunikationsvorrichtung 1 beinhaltet eine Steuereinrichtung 10, eine Hochfrequenzverarbeitungseinrichtung 11 und eine Antenne 12. Die Steuereinrichtung 10 und die Antenne 12 sind jeweils mit der Hochfrequenzverarbeitungseinrichtung 11 verbunden. Die Steuereinrichtung 10 beinhaltet weiterhin eine Schnittstelle 13 zur Verbindung mit weiteren Funkkommunikationsvorrichtungen eines gemeinsamen Funkkommunikationssystems und zur Verbindung mit einem zentralen Steuerrechner.

Die Steuereinrichtung 10 ist dabei ausgebildet, um Nachrichten aus Daten oder Sprache zu erzeugen und diese an die Hochfrequenzverarbeitungseinrichtung 11 weiterzuleiten. Die Hochfrequenzverarbeitungseinrichtung 11 ist dabei ausgebildet, um aus den Nachrichten Signale zu erzeugen und diese über die Antenne 12 abzustrahlen. Die Antenne 12 ist darüber hinaus ausgebildet, um Signale zu empfangen und an die Hochfrequenzverarbeitungseinrichtung 11 weiterzuleiten. Diese ist weiterhin dazu ausgebildet, um aus den empfangenen Signalen Nachrichten zu erzeugen und diese an die Steuereinrichtung 10 weiterzuleiten. Die Steuereinrichtung 10 ist ausgebildet, um diese Nachrichten weiterzuverarbeiten und daraus erneut Daten oder Sprache zu erzeugen.

Die in Fig. 1 dargestellte Funkkommunikationsvorrichtung verfügt über eine Adresse, über welche sie in einem Funkkommunikationssystem erreichbar ist. Empfängt die Hochfrequenzverarbeitungseinrichtung 11 mittels der Antenne 12 ein Signal, so wandelt sie es in eine Nachricht um, welche der Steuereinrichtung 10 zugeführt wird. Die Steuereinrichtung 10 ermittelt, ob die Nachricht an die Adresse dieser Funkkommunikationsvorrichtung gerichtet ist. Ist dies der Fall, so baut die Steuereinrichtung über eine Antwortnachricht, welche durch die Hochfrequenzverarbeitungseinrichtung 11 und die Antenne 12 versendet wird, eine Kommunikationsverbindung zu dem Absender der ursprünglichen Nachricht auf.

War die Nachricht jedoch nicht für die Adresse der Funkkommunikationsvorrichtung bestimmt oder ist die Funkkommunikationsvorrichtung bereits mit einer anderen Kommunikationsverbindung beschäftigt, so sendet sie keine Antwort.

Die Funkkommunikationsvorrichtung 1 ist dabei weiterhin dazu ausgebildet, über die Schnittstelle 13 mit weiteren erfindungsgemäßen Funkkommunikationsvorrichtungen und einem zentralen Steuerrechner verbunden zu werden. Diese bilden dann gemeinsam eine Gruppe. Die Gruppe verfügt dabei über eine Gruppenadresse. Die Gruppenadresse besteht parallel zu der individuellen Adresse der Funkkommunikationsvorrichtung 1.

Empfängt die Funkkommunikationsvorrichtung 1 eine Nachricht, welche an die Gruppenadresse adressiert ist, so antwortet sie auf diese Nachricht, als wäre die Nachricht an die individuelle Adresse adressiert. Als Rückantwortadresse gibt die Funkkommunikationsvorrichtung 1 jedoch stets ihre eigene individuelle Adresse und nicht die Gruppenadresse an. Eine Nachricht an die Gruppenadresse wird nur dann beantwortet, wenn die jeweilige Funkkommunikationsvorrichtung 1 nicht bereits mit einer anderen Kommunikationsverbindung beschäftigt ist und wenn sie über eine Kommunikationsberechtigung verfügt.

Eine Kommunikationsberechtigung liegt innerhalb der Gruppe lediglich ein einziges Mal vor. Das heißt, wenn eine Nachricht adressiert an die Gruppenadresse eingeht, so ist eindeutig, welche Funkkommunikationsvorrichtung der Gruppe auf diese Nachricht antwortet. Auf die Funktion der Gruppe von Funkkommunikationsvorrichtungen wird anhand von Fig. 2 - Fig. 4 näher eingegangen.

Die Funkkommunikationsvorrichtung 1 ermittelt dabei bevorzugt die Übertragungsbedingungen auf mehreren Kommunikationskanälen. Die gemessenen Übertragungsbedingungen werden dabei an sämtliche der Gruppe angehörenden Funkkommunikationsvorrichtungen übertragen.

Fig. 2 zeigt ein Ausführungsbeispiel des erfindungsgemäßen Funkkommunikationssystems in einem ersten Status. Eine erste Funkkommunikationsvorrichtung 20, eine zweite Funkkommunikationsvorrichtung 21, eine dritte Funkkommunikationsvorrichtung 22 und ein Steuerrechner 40 bilden eine Gruppe 25. Das erfindungsgemäße Kommunikationssystem besteht hier aus der Gruppe 25. Die Funkkommunikationsvorrichtungen 20, 21, 22 und der Steuerrechner 40 sind dabei über Verbindungen 23, 24, 41, 42 und 43 miteinander verbunden. Die Verbindungen 23, 24, 41, 42 und 43 erfolgen dabei über die Schnittstelle 13 aus Fig. 1. Hier sind lediglich zwei Verbindungen 23 und 24 zwischen den drei Funkkommunikationsvorrichtungen 20, 21, 22 dargestellt. Im dargestellten Beispiel handelt es sich somit um eine Bus-Verbindung. Alternativ kann auch eine sternförmige Verbindung erfolgen. In diesem Fall ist jede Funkkommunikationsvorrichtung 20 - 22 mit jeder anderen Funkkommunikationsvorrichtung 20 - 22 verbunden. Die Funkkommunikationsvorrichtungen 20, 21, 22 sind dabei logisch sternförmig mit dem Steuerrechner 40 über die Verbindungen 41, 42 und 43 verbunden. Alternativ kann auf die Verbindungen 23 und 24 verzichtet werden. Die Funkkommunikationsvorrichtungen 20 - 22 sind dann lediglich über den Steuerrechner 40 miteinander verbunden.

Innerhalb der Gruppe 25 verfügt gleichzeitig lediglich eine einzelne Funkkommunikationsvorrichtung 20 über eine Kommunikationsberechtigung 26. Bei der Kommunikationsberechtigung 26 handelt es sich lediglich um einen internen Status. Um sicherzustellen, dass lediglich eine der Funkkommunikationsvorrichtungen 20 - 22 über eine Kommunikationsberechtigung 26 verfügt, teilt der Steuerrechner 40 die Kommunikationsberechtigung 26 jeweils zu. Das heißt, damit die Funkkommunikationsvorrichtung 21 über eine Kommunikationsberechtigung verfügen kann, muss der Steuerrechner 40 aktiv ein Signal an die Funkkommunikationsvorrichtung 21 senden, mit welchem die Kommunikationsberechtigung 26 zugewiesen wird.

In dem hier dargestellten Beispiel bilden die Gruppe 25, ein erster Teilnehmer 30 und ein zweiter Teilnehmer 31 ein gemeinsames Kommunikationsnetzwerk. Die Funkkommunikationsvorrichtungen 20 - 22 verfügen dabei jeweils über eine individuelle Adresse. So verfügt die Funkkommunikationsvorrichtung 20 über die Adresse Adr. 50, die Funkkommunikationsvorrichtung 21 über die Adresse Adr. 51 und die Funkkommunikationsvorrichtung 22 über die Adresse Adr. 52. Weiterhin verfügt die Gruppe 25 über eine Gruppenadresse Adr. 55. Weiterhin verfügen auch die Teilnehmer 30 und 31 jeweils über eine individuelle Adresse. So verfügt der Teilnehmer 30 über die Adresse Adr. 53 und der Teilnehmer 31 über die Andresse Adr. 54. Für die Teilnehmer 30, 31 erscheint die Gruppe 25 als eine individuelle Funkkommunikationsvorrichtung mit der Adresse Adr. 55.

Um eine Kommunikation zu initiieren, sendet der erste Teilnehmer 30 eine Nachricht an die Gruppenadresse Adr. 55. Da die Funkkommunikationsvorrichtung 20 gegenwärtig über die Kommunikationsberechtigung 26 verfügt, ist nur die Funkkommunikationsvorrichtung 20 berechtigt, auf diese Nachricht zu antworten. Da die Funkkommunikationsvorrichtung 20 darüberhinaus gegenwärtig mit keiner weiteren Kommunikationsverbindung beschäftigt ist, sendet sie eine Antwortnachricht an den Teilnehmer 30. Dabei sendet sie jedoch ihre eigene individuelle Adresse Adr. 50 als Rückantwortadresse.

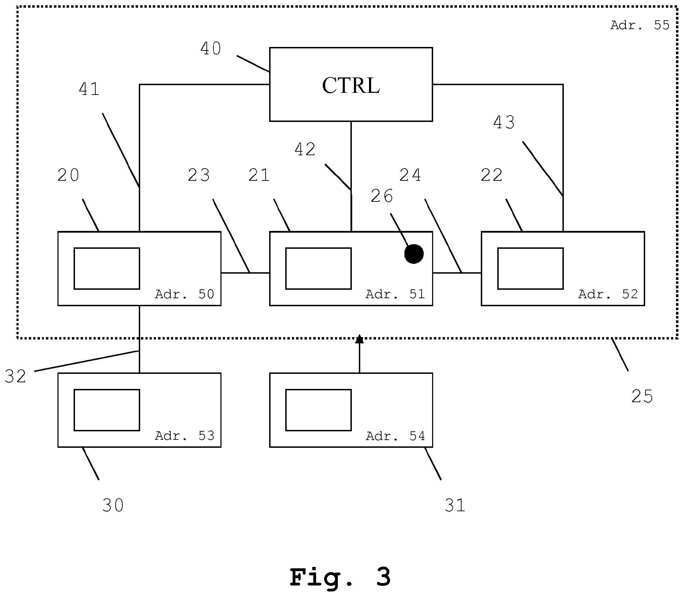

Fig. 3 zeigt das Ausführungsbeispiel des erfindungsgemäßen Funkkommunikationssystems nachdem eine Kommunikationsverbindung zwischen dem ersten Teilnehmer 30 und der Funkkommunikationsvorrichtung 20 aufgebaut wurde. Die Kommunikationsverbindung 32 besteht dabei ausdrücklich zwischen dem Teilnehmer 30 und der Funkkommunikationsvorrichtung 20, nicht zwischen dem Teilnehmer 30 und der Gruppe 25.

Im Moment des Verbindungsaufbaus der Kommunikationsverbindung 32 erlischt die Kommunikationsberechtigung der Funkkommunikationsvorrichtung 20. Der Steuerrechner 40 überträgt die Kommunikationsberechtigung 26 auf eine weitere Funkkommunikationsvorrichtung 21. Die Funkkommunikationsvorrichtung 21 verfügt somit hier nun über die Kommunikationsberechtigung 26.

Vorteilhafterweise teilt die Funkkommunikationsvorrichtung 20 dem Steuerrechner 40 und bevorzugt sämtlichen weiteren Funkkommunikationsvorrichtungen 21, 22 des Funkkommunikationssystems über den Steuerrechner 40 mit, dass es eine Kommunikationsverbindung 32 auf einem bestimmten Kommunikationskanal aufgebaut hat. Die übrigen Funkkommunikationsvorrichtungen 21, 22 werden somit diesen Funkkommunikationskanal für ihre Kommunikation nicht nutzen.

Möchte nun der zweite Teilnehmer 31 ebenfalls die Gruppe 25 kontaktieren, so sendet er eine Nachricht mit der Zieladresse Adr. 55, welche der Gruppenadresse entspricht aus. Da die Funkkommunikationsvorrichtung 21 nun über die Kommunikationsberechtigung 26 verfügt, ist nur sie berechtigt, auf diese Nachricht zu antworten. Sie sendet nun also eine Nachricht mit ihrer eigenen Adresse Adr. 51 als Rückantwortadresse an den zweiten Teilnehmer 31 mit der Adresse Adr. 54. Es kommt somit eine Kommunikationsverbindung zwischen der zweiten Funkkommunikationsvorrichtung 21 und dem zweiten Teilnehmer 31 zustande. Die Kommunikationsberechtigung 26 wird in diesem Moment durch den Steuerrechner 40 auf die dritte Funkkommunikationsvorrichtung 22 der Gruppe 25 übertragen, da diese die einzige gegenwärtig nicht mit einer Kommunikationsverbindung beschäftigte Funkkommunikationsvorrichtung ist.

Sobald eine Kommunikationsverbindung beendet wird, teilt die jeweils betroffene Funkkommunikationsvorrichtung dies dem Steuerrechner 40 mit. Die gerade frei gewordene Funkkommunikationsvorrichtung ist somit erneut verfügbar, um die Kommunikationsberechtigung 26 von dem Steuerrechner 40 zu erhalten.

Bevorzugt wird dabei bei mehreren verfügbaren Funkkommunikationsvorrichtungen die Kommunikationsberechtigung 26 nach einer vorgegeben Reihenfolge vergeben. Alternativ könnte der Steuerrechner 40 die Kommunikationsberechtigung 26 auch zufällig einer weiteren freien Funkkommunikationsvorrichtung übertragen.

Ist gerade keine Funkkommunikationsvorrichtung 20 - 22 frei, um eine Kommunikationsverbindung einzugehen, wird keine Antwort auf eine eingehende Nachricht gesendet.

Die Kommunikationsberechtigung 26 wird durch den Steuerrechner nur an eine freie Funkkommunikationsvorrichtung 20 - 22 weitergeleitet. Ist keine Funkkommunikationsvorrichtung 20 - 22 frei, um eine Kommunikationsverbindung aufzubauen, so wartet der Steuerrechner 40 mit dem Zuweisen der Kommunikationsberechtigung 26 bis eine Funkkommunikationsvorrichtung 20 - 22 frei ist.

Abschließend wird in Fig. 4 auf die Funktionsweise des erfindungsgemäßes Verfahrens zur Funkkommunikation eingegangen. In einem ersten Schritt 60 wird zunächst eine Gruppe von Funkkommunikationsvorrichtungen mit einer gemeinsamen Gruppenadresse gebildet. Die Funkkommunikationsvorrichtungen werden dabei miteinander verbunden. Dies erfolgt über eine Verkabelung.

In einem zweiten Schritt 61 empfangen die Funkkommunikationsvorrichtungen der Gruppe eine Nachricht an die Gruppenadresse. In einem dritten Schritt 62 wird überprüft, ob die berechtige Funkkommunikationsvorrichtung verfügbar ist. Gleichzeitig ist lediglich eine einzige Funkkommunikationsvorrichtung innerhalb der Gruppe zum Empfang von Nachrichten berechtigt. Sofern die gegenwärtig berechtigte Funkkommunikationsvorrichtung gegenwärtig mit einer Kommunikationsverbindung beschäftigt ist, ist die berechtigte Funkkommunikationsvorrichtung nicht verfügbar. In diesem Fall wird in einem vierten Schritt 63 keine Antwort gesendet. Es wird anschließend mit dem zweiten Schritt 61 fortgefahren.

Ist jedoch die berechtigte Funkkommunikationsvorrichtung verfügbar, so wird in einem fünften Schritt 64 eine Kommunikationsverbindung mit der individuellen Adresse der berechtigen Funkkommunikationsvorrichtung aufgebaut. Dies erfolgt durch eine Antwortnachricht der berechtigten Funkkommunikationsvorrichtung an den Absender der Nachricht an die Gruppenadresse. In dieser Nachricht wird die individuelle Adresse der berechtigen Funkkommunikationsvorrichtung als Rückantwortadresse angegeben.

In einem sechsten Schritt 65 wird anschließend überprüft, ob eine weitere Funkkommunikationsvorrichtung verfügbar, d.h. frei ist. Das heißt es wird überprüft, ob eine zu der Gruppe gehörige Funkkommunikationsvorrichtung gegenwärtig keine Kommunikationsverbindung aufrecht erhält. Ist dies der Fall, so wird in einem siebten Schritt 66 die Kommunikationsberechtigung an diese Funkkommunikationsvorrichtung weitergeleitet. Sind mehrere Funkkommunikationsvorrichtungen verfügbar, so erfolgt die Weiterleitung nach einer festgelegten Reihenfolge oder zufällig. Fortgefahren wird anschließend mit dem zweiten Schritt 62.

Ist jedoch keine Funkkommunikationsvorrichtung verfügbar, so wird in einem achten Schritt 67 so lange gewartet, bis eine Funkkommunikationsvorrichtung verfügbar ist. Es wird mit dem siebten Schritt 66 fortgefahren.

Die erfindungsgemäße Funkkommunikationsvorrichtung, das erfindungsgemäße Funkkommunikationssystem und das erfindungsgemäße Verfahren zur Funkkommunikation arbeiten dabei mit einem Festfrequenzverfahren. Zum Verbindungsaufbau verwenden nach einer festgelegten Reihenfolge sämtliche Teilnehmer des Netzwerks synchron einen ständig wechselnden Kommunikationskanal. Sobald die Kommunikationsverbindung aufgebaut wurde, wird für diese Kommunikationsverbindung der Kommunikationskanal festgehalten. Die übrigen Teilnehmer in dem Netzwerk, insbesondere die Funkkommunikationsvorrichtungen der Gruppe, nutzen diesen Kommunikationskanal nun nicht länger zum Verbindungsaufbau. Zur Datenübertragung wird der Kanal weiterhin genutzt. Die Reihenfolge der Kommunikationskanäle wird zwar beibehalten, der bereits genutzte Kommunikationskanal wird jedoch nicht zum Aufbau einer weiteren Verbindung eingesetzt. Sobald eine Funkkommunikationsvorrichtung eine Kommunikationsverbindung aufbaut, teilt dies und bevorzugt den genutzten Kanal dem Steuerrechner mit. Dieser leitet die Information an sämtliche weitere Funkkommunikationsvorrichtungen innerhalb der Gruppe mit. Dieser Kanal wird dann bis zu einer erneuten Freigabe durch die anderen Funkkommunikationsvorrichtungen nicht genutzt. Die erfindungsgemäße Funkkommunikationsvorrichtung, das erfindungsgemäße Funkkommunikationssystem und das erfindungsgemäße Verfahren zur Funkkommunikation arbeiten damit nach dem ALE3G Protokoll.

Die Erfindung ist nicht auf das dargestellte Ausführungsbeispiel beschränkt. Alle vorstehend beschriebenen Merkmale oder in den Figuren gezeigten Merkmale sind im Rahmen der Erfindung beliebig vorteilhaft miteinander kombinierbar.

## Patentansprüche

1. Verfahren zur Funkkommunikation mittels einer ersten Funkkommunikationsvorrichtung (1, 20),
wobei die erste Funkkommunikationsvorrichtung (1, 20) mit zumindest einer weiteren Funkkommunikationsvorrichtung (21, 22) zu einer Gruppe (25) mit einer Gruppenadresse (Adr. 55) zusammengefasst wird,
wobei Nachrichten an die Gruppenadresse (Adr. 55) von der ersten Funkkommunikationsvorrichtung (1, 20) empfangen und verarbeitet werden,
wobei der ersten Funkkommunikationsvorrichtung (1, 20) eine Adresse zugewiesen wird,
wobei die erste Funkkommunikationsvorrichtung (1, 20) eine Kommunikationsberechtigung empfängt,
wobei die erste Funkkommunikationsvorrichtung (1, 20) eine von einem ersten Teilnehmer (30, 31) an die Gruppenadresse gerichtete Nachricht empfängt und verarbeitet und
wobei die erste Funkkommunikationsvorrichtung (1, 20) mittels der zugewiesenen Adresse eine Funkkommunikationsverbindung mit dem ersten Teilnehmer (30, 31) aufbaut, wenn sie über die Kommunikationsberechtigung verfügt.

2. Verfahren nach Anspruch 1,
**dadurch gekennzeichnet,**
**dass** der Aufbau der ersten Kommunikationsverbindung (32) sämtlichen Funkkommunikationsvorrichtungen (1, 20, 21, 22) der Gruppe (25) mitgeteilt wird.

3. Verfahren nach Anspruch 1 oder 2,
**dadurch gekennzeichnet,**
**dass** ein für den Aufbau der ersten Kommunikationsverbindung (32) genutzter Kommunikationskanal sämtlichen Funkkommunikationsvorrichtungen (1, 20, 21, 22) der Gruppe (25) mitgeteilt wird.

4. Verfahren nach einem der Ansprüche 1 bis 3,
**dadurch gekennzeichnet,**
**dass** die erste Kommunikationsverbindung (32) lediglich dann aufgebaut wird, wenn die erste Funkkommunikationsvorrichtung (1, 20) über eine innerhalb der Gruppe (25) lediglich einfach vorhandene Kommunikationsberechtigung (26) verfügt, und
**dass** die Kommunikationsberechtigung (26) bei Aufbau der ersten Kommunikationsverbindung (32) auf genau eine weitere Funkkommunikationsvorrichtung (21, 22) der Gruppe (25) übertragen wird.

5. Verfahren nach einem der Ansprüche 1 bis 4,
**dadurch gekennzeichnet,**
**dass** nach Empfang einer Nachricht von einem ersten Teilnehmer (30, 31) an die Gruppenadresse (Adr. 55) keine Kommunikationsverbindung zu dem ersten Teilnehmer (30, 31) aufgebaut wird, falls die erste Funkkommunikationsvorrichtung (1, 20) gegenwärtig eine Kommunikationsverbindung (32) aufrechterhält.

6. Verfahren nach einem der Ansprüche 1 bis 5,
**dadurch gekennzeichnet,**
**dass** Übertragungsbedingungen auf mehreren Kommunikationskanälen gemessen werden, und
**dass** die gemessenen Übertragungsbedingungen an sämtliche der Gruppe (25) angehörenden Funkkommunikationsvorrichtungen (1, 20, 21, 22) übertragen werden.

7. Funkkommunikationsvorrichtung, die zur Ausführung eines Verfahrens nach einem der Ansprüche 1 bis 6 ausgestaltet ist.

8. Funkkommunikationsvorrichtung nach Anspruch 7
**dadurch gekennzeichnet,**
**dass** die Funkkommunikationsvorrichtung (1, 20) über eine Hochfrequenzverarbeitungseinrichtung (11) verfügt,
**dass** die Hochfrequenzverarbeitungseinrichtung (11) ausgebildet ist, um Hochfrequenzsignale zu empfangen und daraus Nachrichten zu bilden und um aus Nachrichten Hochfrequenzsignale zu erzeugen, und
**dass** die Steuereinrichtung (10) ausgebildet ist, um Nachrichten von der Hochfrequenzverarbeitungseinrichtung (11) zu empfangen und zu verarbeiten und um Nachrichten zu erzeugen und an die Hochfrequenzverarbeitungseinrichtung (11) zu übertragen.

9. Funkkommunikationsvorrichtung nach Anspruch 7 oder 8,
**dadurch gekennzeichnet,**
**dass** die Steuereinrichtung (10) ausgebildet ist, um den Aufbau der ersten Kommunikationsverbindung (32) zumindest mittelbar sämtlichen Funkkommunikationsvorrichtungen (1, 20, 21, 22) der Gruppe (25) mitzuteilen.

10. Funkkommunikationsvorrichtung nach einem Ansprüche 7 bis 9,
**dadurch gekennzeichnet,**
**dass** die Steuereinrichtung (10) ausgebildet ist, um einen für den Aufbau der ersten Kommunikationsverbindung (32) genutzten Kommunikationskanal zumindest mittelbar sämtlichen Funkkommunikationsvorrichtungen (1, 20, 21, 22) der Gruppe mitzuteilen.

11. Funkkommunikationsvorrichtung nach einem der Ansprüche 7 bis 10,
**dadurch gekennzeichnet,**
**dass** die Steuereinrichtung (10) ausgebildet ist, um von einem Steuerrechner (40), welcher Teil der Gruppe (25) ist eine innerhalb der Gruppe (25) lediglich einfach vorhandene Kommunikationsberechtigung (26) zu empfangen, und um die erste Kommunikationsverbindung (32) lediglich dann aufzubauen, wenn sie über die Kommunikationsberechtigung (26) verfügt.

12. Funkkommunikationsvorrichtung nach einem der Ansprüche 7 bis 11,
**dadurch gekennzeichnet,**
**dass** die Steuereinrichtung (10) ausgebildet ist, um nach Empfang einer Nachricht von einem ersten Teilnehmer (30, 31) an die Gruppenadresse (Adr. 55) keine Kommunikationsverbindung zu dem ersten Teilnehmer (30, 31) aufzubauen, falls sie gegenwärtig eine Kommunikationsverbindung (32) aufrechterhält.

13. Funkkommunikationsvorrichtung nach einem der Ansprüche 7 bis 12,
**dadurch gekennzeichnet,**
**dass** die Steuereinrichtung (10) ausgebildet ist, um Übertragungsbedingungen auf mehreren Kommunikationskanälen zu messen, und
um die gemessenen Übertragungsbedingungen zumindest mittelbar an sämtliche der Gruppe (25) angehörende Funkkommunikationsvorrichtungen (1, 20, 21, 22) zu übertragen.

14. Funkkommunikationssystem mit zumindest einer ersten Funkkommunikationsvorrichtung (1, 20) nach einem der Ansprüche 7 bis 13, einer weiteren Funkkommunikationsvorrichtung (21, 22) ausgebildet gemäß einer Funkkommunikationsvorrichtung (1, 20) nach einem der Ansprüche 7 bis 13 und einem Steuerrechner (40),
wobei die erste Funkkommunikationsvorrichtung (1, 20), die weitere Funkkommunikationsvorrichtung (20, 21) und der Steuerrechner (40) eine Gruppe (25) bilden, und
wobei der Steuerrechner (40) eine einzige Kommunikationsberechtigung (26) an die erste Funkkommunikationsvorrichtung (1, 20) oder die weitere Funkkommunikationsvorrichtung (21, 22) vergibt.

15. Funkkommunikationssystem nach Anspruch 14,
**dadurch gekennzeichnet,**
**dass** der Steuerrechner (40) die erste Funkkommunikationsvorrichtung (1, 20) und die weitere Funkkommunikationsvorrichtung (21, 22) derart steuert, dass ein bereits in Benutzung befindlicher Kommunikationskanal durch keine weitere Kommunikationsverbindung genutzt wird.

## Claims

1. Method for radio communication by means of a first radio communication device (1, 20),
wherein the first radio communication device (1, 20) is combined with at least one further radio communication device (21, 22) to form a group (25) with a group address (Adr. 55),
wherein messages to the group address (Adr. 55) are received and processed by the first radio communication device (1, 20),
wherein the first radio communication device (1, 20) is assigned an address,
wherein the first radio communication device (1, 20) receives a communication authorisation,
wherein the first radio communication device (1, 20) receives and processes a message directed from a first participating unit (30, 31) to the group address and wherein the first radio communication device (1, 20) establishes a radio communication connection with the first participating unit (30, 31) by means of the assigned address when it has the communication authorisation.

2. Method according to claim 1,
**characterised in that**
all the radio communication devices (1, 20, 21, 22) of the group (25) are informed of the establishment of the first communication connection (32).

3. Method according to claim 1 or 2,
**characterised in that**
all the radio communication devices (1, 20, 21, 22) of the group (25) are informed of a communication channel used for the establishment of the first communication connection (32).

4. Method according to one of claims 1 to 3,
**characterised in that**
the first communication connection (32) is only established when the first radio communication device (1,20) has a communication authorisation (26) which is only available singly within the group (25), and
**in that** the communication authorisation (26) is transmitted to just one further radio communication device (21, 22) of the group (25) when the first communication connection (32) is established.

5. Method according to one of claims 1 to 4,
**characterised in that**
after reception of a message from a first participating unit (30, 31) to the group address (Adr. 55), no communication connection to the first participating unit (30, 31) is established if the first radio communication device (1, 20) is currently maintaining a communication connection (32).

6. Method according to one of claims 1 to 5,
**characterised in that**
transmission conditions are measured on a plurality of communication channels, and
**in that** the measured transmission conditions are transmitted to all the radio communication devices (1, 20, 21, 22) belonging to the group (25).

7. Radio communication device which is designed to implement a method according to one of claims 1 to 6.

8. Radio communication device according to claim 7, **characterised in that**
the radio communication device (1, 20) has a high frequency processing unit (11),
**in that** the high frequency processing unit (11) is configured to receive high frequency signals and form messages from these and to generate high frequency signals from messages, and
**in that** the control unit (10) is configured to receive and to process messages from the high frequency processing unit (11) and to generate messages and transmit them to the high frequency processing unit (11).

9. Radio communication device according to claim 7 or 8,
**characterised in that**
the control unit (10) is configured to inform all the radio communication devices (1, 20, 21, 22) of the group (25) at least indirectly of the establishment of the first communication connection (32).

10. Radio communication device according to one of claims 7 to 9,
**characterised in that**
the control unit (10) is configured to inform all the radio communication devices (1, 20, 21, 22) of the group at least indirectly of a communication channel used for the establishment of the first communication connection (32).

11. Radio communication device according to one of claims 7 to 10,
**characterised in that**
the control unit (10) is configured to receive a communication authorisation (26) which is only available singly within the group (25) from a control computer (40) which is part of the group (25), and to establish the first communication connection (32) only when it has the communication authorisation (26).

12. Radio communication device according to one of claims 7 to 11,
**characterised in that**
the control unit (10) is configured, after reception of a message from a first participating unit (30, 31) to the group address (Adr. 55), not to establish a communication connection to the first participating unit (30, 31) if it is currently maintaining a communication connection (32).

13. Radio communication device according to one of claims 7 to 12,
**characterised in that**
the control unit (10) is configured to measure transmission conditions on a plurality of communication channels, and
to transmit the measured transmission conditions to all the radio communication devices (1, 20, 21, 22) belonging to the group (25) at least indirectly.

14. Radio communication system with at least a first radio communication device (1, 20) according to one of claims 7 to 13, a further radio communication device (21, 22) configured according to a radio communication device (1, 20) according to one of claims 7 to 13 and a control computer (40),
wherein the first radio communication device (1, 20), the further radio communication device (21, 22) and the control computer (40) form a group (25), and
wherein the control computer (40) grants a single communication authorisation (26) to the first radio communication device (1, 20) or the further radio communication device (21, 22).

15. Radio communication system according to claim 14,
**characterised in that**
the control computer (40) controls the first radio communication device (1, 20) and the further radio communication device (21, 22) in such a way that a communication channel which is already in use is not used by any further communication connection.

## Revendications

1. Procédé de radiocommunication au moyen d'un premier dispositif de radiocommunication (1, 20),
dans lequel le premier dispositif de radiocommunication (1, 20) est réuni à au moins un autre dispositif de radiocommunication (21, 22) de manière à former un groupe (25) présentant une adresse de groupe (Adr. 55),
dans lequel des messages envoyés à l'adresse de groupe (Adr. 55) sont reçus et traités par le premier dispositif de radiocommunication (1, 20),
dans lequel une adresse est allouée au premier dispositif de radiocommunication (1, 20),
dans lequel le premier dispositif de radiocommunication (1, 20) reçoit une autorisation de communication,
dans lequel le premier dispositif de radiocommunication (1, 20) reçoit et traite un message adressé à l'adresse de groupe par un premier abonné (30, 31) et
dans lequel le premier dispositif de radiocommunication (1, 20) établit une liaison de radiocommunication avec le premier abonné (30, 31) au moyen de l'adresse allouée, lorsqu'il dispose de l'autorisation de communication.

2. Procédé selon la revendication 1,
**caractérisé**
**en ce que** l'établissement de la première liaison de communication (32) est notifié à tous les dispositifs de radiocommunication (1, 20, 21, 22) du groupe (25).

3. Procédé selon la revendication 1 ou 2,
**caractérisé**
**en ce qu'**un canal de communication utilisé pour l'établissement de la première liaison de communication (32) est notifié à tous les dispositifs de radiocommunication (1, 20, 21, 22) du groupe (25).

4. Procédé selon l'une quelconque des revendications 1 à 3,
**caractérisé**
**en ce que** la première liaison de communication (32) n'est établie que lorsque le premier dispositif de radiocommunication (1, 20) dispose d'une autorisation de communication (26) présente en un seul exemplaire à l'intérieur du groupe (25), et
**en ce que** l'autorisation de communication (26), lors de l'établissement de la première liaison de communication (32), est transmise à un seul autre dispositif de radiocommunication (21, 22) du groupe (25).

5. Procédé selon l'une quelconque des revendications 1 à 4,
**caractérisé**
**en ce qu'**après la réception d'un message adressé par un premier abonné (30, 31) à l'adresse de groupe (Adr. 55), aucune liaison de communication n'est établie avec le premier abonné (30, 31), au cas où le premier dispositif de radiocommunication (1, 20) maintiendrait actuellement une liaison de communication (32).

6. Procédé selon l'une quelconque des revendications 1 à 5,
**caractérisé**
**en ce que** les conditions de transmission sont mesurées sur plusieurs canaux de communication, et
**en ce que** les conditions de transmission mesurées sont transmises à tous les dispositifs de radiocommunication (1, 20, 21, 22) appartenant au groupe (25).

7. Dispositif de radiocommunication, qui est conçu pour la mise en oeuvre d'un procédé selon l'une quelconque des revendications 1 à 6.

8. Dispositif de radiocommunication selon la revendication 7,
**caractérisé**
**en ce que** le dispositif de radiocommunication (1, 20) dispose d'un système de traitement haute fréquence (11),
**en ce que** le système de traitement haute fréquence (11) est conçu pour recevoir des signaux haute fréquence et pour former des messages à partir de ces derniers et pour générer des signaux haute fréquence à partir des messages, et
**en ce que** le dispositif de commande (10) est conçu pour recevoir des messages du système de traitement haute fréquence (11) et pour les traiter et pour générer des messages et les transmettre au système de traitement haute fréquence (11).

9. Dispositif de radiocommunication selon la revendication 7 ou 8,
**caractérisé**
**en ce que** le dispositif de commande (10) est conçu pour notifier l'établissement de la première liaison de communication (32) au moins indirectement à tous les dispositifs de radiocommunication (1, 20, 21, 22) du groupe (25).

10. Dispositif de radiocommunication selon l'une quelconque des revendications 7 à 9,
**caractérisé en ce que**
le dispositif de commande (10) est conçu pour notifier un canal de communication utilisé pour l'établissement de la première liaison de communication (32) au moins indirectement à tous les dispositifs de radiocommunication (1, 20, 21, 22) du groupe.

11. Dispositif de radiocommunication selon l'une quelconque des revendications 7 à 10,
**caractérisé**
**en ce que** le dispositif de commande (10) est conçu pour recevoir d'un ordinateur de commande (40), lequel fait partie du groupe (25), une autorisation de communication (26) présente en un seul exemplaire à l'intérieur du groupe (25), et pour n'établir la première liaison de communication (32) que lorsqu'elle dispose de l'autorisation de communication (26).

12. Dispositif de radiocommunication selon l'une quelconque des revendications 7 à 11,
**caractérisé**
**en ce que** le dispositif de commande (10) est conçu pour n'établir aucune liaison de communication avec le premier abonné (30, 31) après la réception d'un message adressé par un premier abonné (30, 31) à l'adresse de groupe (Adr. 55), au cas où il maintiendrait actuellement une liaison de communication (32).

13. Dispositif de radiocommunication selon l'une quelconque des revendications 7 à 12,
**caractérisé**
**en ce que** le dispositif de commande (10) est conçu pour mesurer les conditions de transmission à plusieurs canaux de communication, et
pour transmettre les conditions de transmission mesurées au moins indirectement à tous les dispositifs de radiocommunication (1, 20, 21, 22) appartenant au groupe (25).

14. Système de radiocommunication comprenant au moins un premier dispositif de radiocommunication (1, 20) selon l'une quelconque des revendications 7 à 13, un autre dispositif de radiocommunication (21, 22) conçu conformément à un dispositif de radiocommunication (1, 20) selon l'une quelconque des revendications 7 à 13, et un ordinateur de commande (40),
dans lequel le premier dispositif de radiocommunication (1, 20), l'autre dispositif de radiocommunication (26) et l'ordinateur de commande (40) forment un groupe (25), et
dans lequel l'ordinateur de commande (40) attribue une seule autorisation de communication (1, 20) au premier dispositif de radiocommunication (1, 20) ou à l'autre dispositif de radiocommunication (21, 22).

15. Système de radiocommunication selon la revendication 14,
**caractérisé**
**en ce que** l'ordinateur de commande (40) commande le premier dispositif de radiocommunication (1, 20) et l'autre dispositif de radiocommunication (21, 22) de telle manière
qu'un canal de communication déjà en cours d'utilisation n'est utilisé par aucune autre liaison de communication.
